# DEMANDE DE BREVET EUROPEEN

(11) **EP 1 354 757 A2**
(43) Date de publication de la demande: **22.10.2003**
(21) Numéro de dépôt: 03290955.8
(22) Date de dépôt: 17.04.2003
(51) Int. Cl.: B60N 2/64

(54) **Siège de véhicule à dossier mince**

(30) Priorité: 17.04.2002 FR 0204793
(71) Demandeur: Renault s.a.s., 92100 Boulogne Billancourt (FR)
(72) Inventeur: Freytrich, Jean-Pierre, 92130 Issy les Moulineaux (FR); Legrand, Jean-Pierre, 28300 Bercheres Saint Germain (FR)

(57) **Abrégé**

L'invention concerne un siège de véhicule à dossier mince.

Le siège comprend une pluralité de pavés parallélépipédiques (18) en matière rigide, disposés côte à côte avec un faible intervalle (26) entre leurs faces adjacentes et reliés entre eux, au niveau du fond desdits intervalles, par des moyens de liaison souples et inextensibles (20), de sorte que les pavés peuvent pivoter l'un par rapport à l'autre seulement dans le sens où leurs faces adjacentes s'écartent l'une de l'autre, mais pas dans le sens contraire, la paroi plane ainsi formée par les pavés étant tendue entre deux montants tubulaires (12, 14) et fixée à ces derniers, avec une orientation pour laquelle ladite paroi se déforme sous la pression du dos du passager, , une pluralité d'éléments en forme de coin (30) étant insérés dans lesdits intervalles, de façon que chaque pavé fasse avec le pavé adjacent un angle égal à celui des éléments en forme de coin et que les faces intérieures des pavés forment entre elles une surface continue légèrement incurvée concave.

## Description

### Siège de véhicule à dossier mince.

La présente invention concerne un siège de véhicule muni d'un dossier mince.

Actuellement, les dossiers de sièges de véhicule sont relativement épais, car ils comprennent une couche importante de mousse destinée à procurer une sensation de souplesse et de confort au passager. Il en résulte une diminution de l'espace disponible à l'arrière du siège et une impression d'exiguïté pour l'occupant ainsi que pour l'observateur se trouvant à l'extérieur du véhicule. Cette sensation est ressentie aussi bien lorsque le dossier est redressé que lorsqu'il est replié sur l'assise.

C'est pourquoi un besoin s'est fait sentir ces dernières années de réduire autant que possible l'épaisseur du dossier, sans toutefois sacrifier au confort. C'est ainsi qu'il est apparu sur le marché plusieurs types de ce que l'on appelle improprement des "sièges minces", qui sont en réalité des sièges à dossier mince.

Un autre défaut des dossiers existants est qu'ils se déforment sous l'action d'efforts qui leur sont appliqués depuis l'arrière, par exemple lorsque, en cas de freinage brusque, des objets ou des passagers se trouvant à l'arrière sont projetés vers l'avant. Cette déformation du dossier est transmise au passager qui occupe le siège avant et peut entraîner de graves conséquences pour lui.

La présente invention vise à remédier aux inconvénients susmentionnés, et elle concerne donc un siège de véhicule à dossier mince qui présente, au repos, une forme incurvée s'adaptant au galbe du dos du passager, qui se déforme élastiquement sous la pression du dos de manière à le soutenir constamment toute sa surface, mais qui est pratiquement indéformable vis-à-vis des forces qui sont appliquées sur sa face arrière.

Pour obtenir ces performances, le dossier selon l'invention comprend une pluralité de pavés parallélépipédiques en matière rigide, disposés côte à côte avec un faible intervalle entre leurs faces adjacentes et reliés entre eux, au niveau du fond desdits intervalles, par des moyens de liaison souples et inextensibles, de sorte que les pavés peuvent pivoter l'un par rapport à l'autre seulement dans le sens où leurs faces adjacentes s'écartent l'une de l'autre mais pas dans le sens contraire, la paroi plane ainsi formée par les pavés étant tendue entre deux montants tubulaires et fixée à ces derniers, avec une orientation pour laquelle ladite paroi se déforme sous la pression du dos du passager.

Le dossier peut comprendre également une pluralité d'éléments en forme de coin ou clés qui sont insérés dans lesdits intervalles, de façon que chaque pavé fasse avec le pavé adjacent un angle égal à celui des éléments en forme de coin et que les faces intérieures des pavés forment entre elles une surface continue légèrement incurvée concave.

Le dossier peut comprendre encore au moins une bande en matière élastique qui est fixée sur les faces extérieures des pavés de manière à maintenir en place les clés à l'intérieur des intervalles et à conférer à ladite paroi une aptitude à se déformer élastiquement lorsqu'elle est enfoncée par le dos du passager.

Selon un mode de réalisation de l'invention, le dossier comprend plusieurs bandes de pavés disposées horizontalement entre les montants tubulaires, l'une au-dessus de l'autre, chaque bande de pavés comprenant plusieurs pavés disposés côte à côte en ligne et reliés au niveau de leur base par lesdits moyens de liaison souples.

Le dossier peut également être formé de plusieurs doubles bandes de pavés, chaque double bande comprenant deux lignes parallèles de pavés, les pavés de chaque ligne étant reliés aux pavés voisins de la même ligne et au pavé de l'autre ligne par des moyens de liaison souples.

Chaque ligne de pavés peut être munie d'une bande élastique, mais on peut également utiliser une nappe élastique pour recouvrir tout l'ensemble des pavés du dossier.

Les pavés peuvent être réalisés par moulage d'une matière plastique rigide. Ils peuvent être moulés soit individuellement, puis être reliés entre eux, au niveau de leur base, par des moyens de liaison souples, par exemple en les collant par leur base sur une bande de tissu ou de matière plastique souple, soit être fabriqués par moulage en chapelets, les pavés étant disposés côte à côte en ligne et reliés entre eux par de membranes souples venant de moulage avec les pavés. On peut encore les fabriquer en nappes où les pavés sont disposés selon un réseau quadrillé. Chaque pavé est alors relié aux quatre pavés qui l'encadrent au moyen de membranes souples venant de moulage avec les pavés, au niveau de leur base.

Lorsque l'occupant d'un siège s'appuie sur le dossier, il exerce sur chaque bande de pavés une poussée qui peut être différente d'une bande de pavés à l'autre. Les bandes de pavés s'incurvent donc différemment l'une l'autre, en distendant plus ou moins les bandes élastiques associées, de sorte que le dossier se déforme exactement pour se conformer exactement et à chaque instant au dos du passager en procurant une sensation d'appui élastique confortable.

Par contre, si une poussée est exercée sur le dossier depuis l'arrière, les pavés s'arqueboutent l'un sur l'autre et ne peuvent pas être enfoncés au-delà de leur position de repos.

On peut noter toutefois que l'ensemble du dossier peut subir une translation globale en direction de l'occupant. Pour éviter cela, chaque bande de pavés comprend à ses extrémités deux pavés terminaux qui sont conformés pour venir en appui contre des butées qui sont fixées sur les montants tubulaires, lorsque la bande de pavés est poussée depuis l'arrière.

Selon une autre caractéristique de l'invention, le dossier comporte encore au moins une sangle inextensible passant à l'arrière d'au moins une bande de pavés et fixée par ses extrémités sur les montants tubulaires, ladite sangle ayant une longueur supérieure à celle des bandes de pavés de manière à limiter la déformation maximale du dossier sous la poussée du dos.

Ces caractéristiques et avantages de l'invention ainsi que d'autres seront mieux comprises à la lecture de la description qui va suivre d'un mode de réalisation de l'invention, faite en regard des dessins annexés dans lesquels :
la figure 1 est une vue en perspective partielle d'un dossier mince selon l'invention, vu du côté passager, la sellerie étant omise ;
la figure 2 est une vue en perspective partielle depuis l'arrière, et montrant seulement deux clés en place et une clé prête à être insérée entre les pavés ;
la figure 3 est une vue en coupe selon le plan horizontal III-III de la figure 1 ; et
la figure 4 est une vue partielle en élévation d'une bande de pavés à la sortie du moulage et d'une clé prête à être insérée dans l'intervalle compris entre deux pavés.

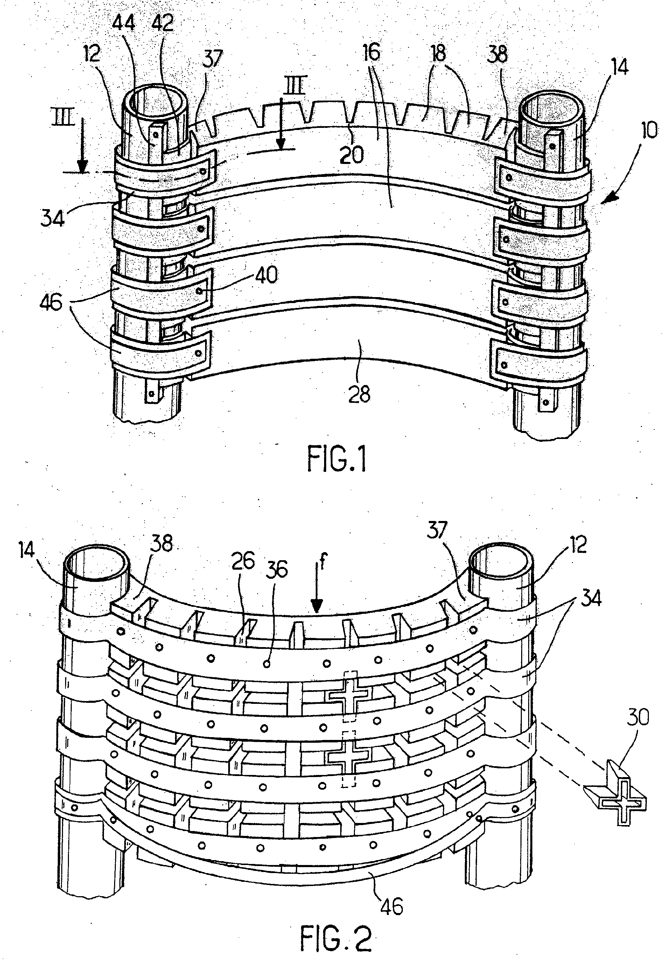

Le dossier de siège 10 représenté sur les figures 1 et 2 comprend deux montants tubulaires supports 12, 14 qui peuvent être articulés par leurs extrémités inférieures sur une assise, non représentée, de manière à pouvoir être rabattus sur elle. Les montants peuvent être réunis à leur extrémité supérieure par une poutre de rigidification portant un appui-tête, non représenté.

Entre les éléments tubulaires sont tendues plusieurs bandes 16 de pavés parallélépipédiques 18 en matière plastique rigide, disposés côte à côte en ligne et reliés l'un à l'autre au niveau de leur base par des ponts 20, souples mais inextensibles, grâce auxquels chaque pavé peut être plié par rapport au suivant.

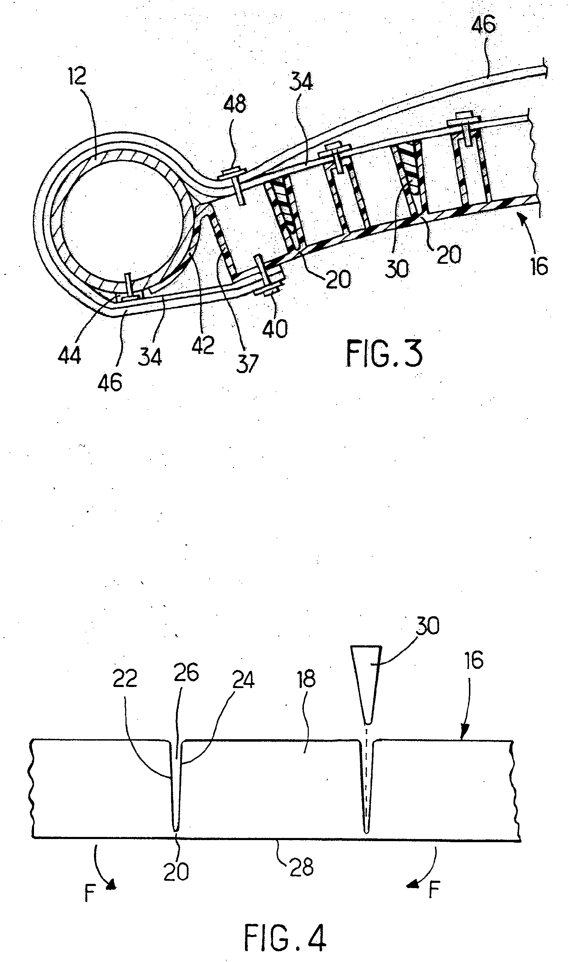

Les bandes de pavés peuvent être réalisées par moulage. Comme le montre la figure 4, à la sortie du moule, les faces adjacentes 22, 24 des pavés voisins sont séparées par un intervalle 26 qui présente un très léger évasement depuis le pont de liaison 20 vers le haut. Il en résulte que la bande 16 peut être courbée dans le sens des flèches F pour lequel les faces adjacentes 22, 24 divergent davantage l'une de l'autre. Par contre, si l'on tente de courber la bande dans le sens inverse, les pavés s'arqueboutent entre eux, de sorte que la bande de pavés devient rigide et pratiquement indéformable.

L'invention met à profit cette propriété de la bande de pavés d'être pliable dans un sens et rigide dans l'autre sens pour réaliser un dossier du siège. Pour cela, les bandes de pavés sont fixées sur les montants tubulaires 12, 14 de manière que leur face plane 28 qui contient les ponts de liaison 20 soit tournée vers le dos du passager.

Selon l'invention, on donne à chaque bande de pavés 16 une courbure naturelle qui s'adapte à la forme du dos, en insérant dans chacun des intervalles 26 un élément en forme de coin 30 ou clé. La clé a un angle d'ouverture supérieur à l'évasement d'origine des faces adjacentes 22, 24. L'introduction des clés 30 ne change pas les propriétés de la bande de pavés que l'on a expliquées ci-dessus. Le seul changement est que, au repos, la bande de pavés est incurvée au lieu d'être plane.

Comme le montre la figure 2, les bandes de pavés sont fixées de manière que les pavés soient disposés en lignes et colonnes. Grâce à cet agencement, on peut réduire le nombre de clés en utilisant des clés cruciformes 30, telles que représenté à la figure 2, dont les quatre branches ont en section une forme de coin. Les branches de chaque clé s'insèrent dans les quatre intervalles en croix formés par chaque groupe de quatre pavés adjacents.

Lorsqu'une pression est exercée par le passager sur le dossier dans le sens de la flèche f sur la figure 2, les lignes horizontales de pavés et les colonnes verticales de pavés ont tendance à s'incurver, ce qui provoque l'ouverture des intervalles compris entre les pavés. De ce fait, au moins certaines parmi les clés cruciformes 30 peuvent s'échapper de leur logement. Pour éviter cela, il est prévu selon l'invention, de fixer sur les faces arrière des pavés de chaque ligne de pavés une bande élastique 34 de largeur suffisante pour qu'elle recouvre à la fois les extrémités des branches verticales des clés cruciformes, situées au-dessus et au-dessous de la bande de pavés considérée. Cette disposition est illustrée par la figure 2 où l'on n'a représenté, pour la clarté du dessin, que deux clés insérées entre les pavés de deux colonnes voisines. De préférence, chaque bande élastique 34 est fixée sur chacun des pavés par tout moyen d'assemblage, par exemple au moyen de vis 36.

La bande élastique remplit deux fonctions : elle maintient en place les clés et elle confère une élasticité aux déformations du dossier. Ainsi, si une pression d'enfoncement s'exerce sur le dossier, la concavité du dossier s'accentue, ce qui s'accompagne de l'ouverture de tous les intervalles 26 dans un degré plus ou moins prononcé selon la zone du dos qui appuie sur l'un ou l'autre pavé. Les portions de bande élastiques comprises entre chaque paire de vis 36 voisines se distendent donc différemment et exercent ainsi des forces de rappel sur les pavés individuels tendant à les ramener à leur position initiale. Cette élasticité donne au passager une sensation de confort.

Les bandes élastiques peuvent être de raideur différentes suivant leur position sur le dossier, de manière à adapter le confort du dossier au dos.

Comme on l'a expliqué précédemment, si une contrainte est appliquée depuis l'arrière sur la face arrière du dossier, celui-ci ne peut pas s'enfoncer au-delà de sa position de repos dans laquelle les pavés sont en appui sur les clés. Ainsi, la contrainte est bloquée par le dossier et n'est pas transmise au passager.

Il va de soi que l'on obtiendra le même résultat si les bandes élastiques sont fixées verticalement, sur les colonnes de pavés. On peut également utiliser à la fois des bandes élastiques horizontales et verticales. Dans ce cas, le confort du dos est notablement amélioré car le dossier s'adapte aux déformations provoquées par le dos, aussi bien dans le sens vertical que dans le sens horizontal. On peut enfin utiliser une nappe élastique qui est fixée sur toute la surface du dossier, soit sur la périphérie du dossier, soit individuellement sur chacun des pavés. Cette nappe remplit la même fonction que des bandes élastiques croisées horizontales et verticales, mais elle est plus facile à monter.

Toujours dans un but de simplification et de facilité de montage, les pavés peuvent être réalisés sous forme d'une double bande de pavés parallèles venant de moulage, les pavés d'une même bande étant reliés entre eux par des ponts de liaison comme précédemment, tandis que les pavés d'une bande sont reliés aux pavés adjacents de l'autre bande par des liaisons amples ou élastiques.

Le mode de liaison des bandes de pavés aux montants tubulaires 12, 14 est illustré sur les figures 1 et 2. Chaque bande élastique 34 se prolonge au delà des pavés terminaux 37, 38 par des portions de fixation qui s'enroulent sur les montants tubulaires et qui sont fixées sur la face avant desdits pavés terminaux, par exemple au moyen de vis ou de boulons 40.

Comme le montre la figure 3, lesdits pavés terminaux comportent une extrémité effilée 42 en forme de portion de cylindre qui s'adapte sur la paroi latérale de l'élément tubulaire. De plus, des butées 44 sont fixées sur les montants tubulaires, immédiatement en avant desdites extrémités 42 afin d'empêcher le mouvement d'avancée en bloc du dossier.

Une déformation du dossier au-delà d'une certaine limite peut nuire à la sensation de confort, car le passager a l'impression que le dossier est trop mou et ne soutient pas assez le dos. C'est ce qui peut se produire si les bandes élastiques 34 sont trop sollicitées en extension. Pour pallier à cet inconvénient, le dossier est muni de plusieurs sangles inextensibles 46, de préférence, autant de sangles que de bandes élastiques. Chaque sangle comporte deux portions d'extrémité qui s'enroulent autour des montants tubulaires 12, 14 et qui sont fixées au moyen de boulons 40, 48 ou de tout autre moyen de liaison sur les deux faces des pavés terminaux 37, 38, et une portion centrale lâche passant à l'arrière de la bande de pavés. La déformation maximale d'une bande de pavés est obtenue lorsque la portion centrale de la sangle correspondante est tendue entre les deux boulons 48 qui sont vissés aux extrémités de ladite portion centrale. Sur la figure 1, on n'a représenté que la sangle la plus basse pour ne pas encombrer la figure. Elle est représentée à l'état détendu, car le dossier est au repos.

L'invention a donc permis de réaliser un dossier mince présentant le même confort que les dossiers classiques. L'épaisseur du dossier peut être réduite jusqu'à 50 mm ou davantage.

Selon l'invention, l'assise du siège peut elle aussi être fabriquée de la même façon que le dossier. Il va de soi que le dossier et l'assise sont recouverts d'une sellerie en cuir ou en tissu.

## Revendications

1. Siège de véhicule, **caractérisé en ce qu'**il comporte un dossier (10) comprenant une pluralité de pavés parallélépipédiques (18) en matière rigide, disposés côte à côte avec un faible intervalle (26) entre leurs faces adjacentes (22, 24) et reliés entre eux, au niveau du fond desdits intervalles, par des moyens de liaison (20) souples et inextensibles, de sorte que les pavés peuvent pivoter l'un par rapport à l'autre seulement dans le sens où leurs faces adjacentes s'écartent l'une de l'autre, mais pas dans le sens contraire, la paroi plane ainsi formée par les pavés étant tendue entre deux montants tubulaires (12, 14) et fixée à ces derniers, avec une orientation pour laquelle ladite paroi se déforme sous la pression du dos du passager.

2. Siège selon la revendication 1, **caractérisé en ce qu'**il comporte en outre une pluralité d'éléments en forme de coin ou clés (30) qui sont insérés dans lesdits intervalles, de façon que chaque pavé fasse avec le pavé adjacent un angle égal à celui des éléments en forme de coin et que les faces intérieures des pavés forment entre elles une surface continue légèrement incurvée concave.

3. Siège selon la revendication 1, **caractérisé en ce qu'**il comporte en outre au moins une bande (34) en matière élastique qui est fixée sur les faces extérieures des pavés de manière à maintenir en place les clés à l'intérieur des intervalles et à conférer à ladite paroi une aptitude à se déformer élastiquement lorsqu'elle est enfoncée par le dos du passager.

4. Siège selon la revendication 1, **caractérisé en ce que** le dossier comprend plusieurs bandes de pavés (16) disposées horizontalement entre les montants tubulaires (12, 14) l'une au-dessus de l'autre, chaque bande de pavés comprenant plusieurs pavés (18) disposés côte à côte en ligne et reliés au niveau de leur base par lesdits moyens de liaison souples (20).

5. Siège selon la revendication 1, **caractérisé en ce que** le dossier comprend plusieurs doubles bandes de pavés, chaque double bande comprenant deux lignes parallèles de pavés, les pavés de chaque ligne étant reliés aux pavés voisins de la même ligne et au pavé de l'autre ligne par des moyens de liaison souples.

6. Siège selon la revendication 4, **caractérisé en ce que** chaque bande de pavés est munie d'une bande élastique (34).

7. Siège selon la revendication 1, **caractérisé en ce qu'**une nappe élastique recouvre l'ensemble de tous les pavés du dossier.

8. Siège selon la des revendication 1, **caractérisé en ce que** les pavés (18) sont réalisés par moulage d'une matière plastique rigide.

9. Siège selon la revendication 1, **caractérisé en ce que** les pavés sont moulés individuellement, puis reliés entre eux par des moyens de liaison souples, par exemple en les collant par leur base sur une bande de tissu ou de matière plastique souple.

10. Siège selon la revendication 1, **caractérisé en ce que** les pavés sont fabriqués par moulage en chapelets, les pavés étant disposés côte à côte en ligne et reliés entre eux à leur base par de membranes souples venant de moulage avec les pavés.

11. Siège selon la revendication 3, **caractérisé en ce que** chaque bande élastique se prolonge au-delà des pavés terminaux (37, 38) de chaque bande de pavés par des portions qui sont enroulées autour des montants tubulaires (12, 14) et qui sont fixées sur lesdits pavés terminaux par tout moyen de liaison.

12. Siège selon la revendication 1, **caractérisé en ce que** chaque bande élastique est fixée à chacun des pavés.

13. Siège selon la revendication 1, **caractérisé en ce que** les pavés terminaux (37, 38) de chaque bande de pavés comportent une extrémité (42) qui est susceptible de venir en appui contre une butée (44) qui est fixée sur le montant tubulaire, lorsque la bande de pavés subit une poussée depuis l'arrière.

14. Siège selon la revendication 2, **caractérisé en ce que** les clés (30) sont cruciformes et comportent quatre branches ayant une section en forme de coin.

15. Siège selon la revendication 3, **caractérisé en ce que** chaque bande élastique (34) a une largeur suffisante pour qu'elle recouvre à la fois les extrémités des branches verticales des clés cruciformes (30), situées au-dessus et au-dessous de la bande de pavés considérée.

16. Siège selon l'une des revendications précédentes, **caractérisé en ce qu'**il comporte en outre au moins une sangle inextensible (46) fixée par ses extrémités sur les montants tubulaires de façon à présenter une portion centrale lâche de longueur supérieure à celle des bandes de pavés de manière à limiter la déformation maximale du dossier sous la poussée du dos.

17. Siège selon la revendication 1, **caractérisé en ce que** les montants tubulaires (12, 14) sont articulés par leur extrémité inférieure sur une assise.

18. Siège selon la revendication 1, **caractérisé en ce que** les montants tubulaires (12, 14) sont reliés à leur extrémité supérieure par une poutre de rigidification pouvant porter un appui-tête.

19. Siège selon l'une des revendications 1 à 17, **caractérisé en ce qu'**il comporte une assise comprenant les mêmes éléments que le dossier.

20. Siège selon l'une des revendications précédentes, **caractérisé en ce que** le dossier et l'assise sont recouverts d'une sellerie.
